# EUROPEAN PATENT APPLICATION

(11) **EP 2 067 841 A1**
(43) Date of publication of application: **10.06.2009**
(21) Application number: 07122464.6
(22) Date of filing: 06.12.2007
(51) Int. Cl.: C09K 11/77, G21K 4/00

(54) **X-Ray imaging photostimulable phosphor screen or panel.**

(71) Applicant: Agfa HealthCare NV, 2640 Mortsel (BE)
(72) Inventor: Tahon, Jean-Pierre, 2640, Mortsel (BE); Lenaerts, Jens, 2640, Mortsel (BE); Vincze, Laszlo, 2640, Mortsel (BE); Silversmit, Geert, 2640, Mortsel (BE); Leblans, Paul, 2640, Mortsel (BE)

(57) **Abstract**

In a method of preparing a phosphor or scintillator layer to become deposited on a support, a vapour depositing step is applied from a crucible unit by heating as phosphor precursor raw materials present in said crucible, a Cs(X,X') matrix compound and an activator or dopant precursor compound, wherein said crucible unit comprises at least a bottom and surrounding side walls as a container for phosphor precursor raw materials present in said crucible in liquefied form after heating said crucible, and wherein said Cs(X,X') matrix compound has a higher vapour pressure than said activator or dopant precursor compound, said method comprising a step of providing said activator or dopant compound in form of a precursor raw material represented by the formula CsₓEu_{y}X'_{(x+αy)}, wherein x, y and α are integers, wherein x/y is more than 0.25 and wherein α is at least 2, wherein X represents Br and wherein X' stands for F, Cl, Br, I or a combination thereof; followed by an annealing step after a vapour depositing step, provided that said annealing step proceeds in an ambient atmosphere after cooling said phosphor or scintillator layer, deposited on said support; and wherein as a result a binderless needle-shaped Cs(X,X'):Eu phosphor or scintillator layer becomes provided, having on top of its needle-shaped phosphors, aligned in parallel, an average ratio of divalent to trivalent europium dopant of more than 1:1; wherein said average ratio decreases to an extent of less than 2% per hour, while being exposed to X-rays having an energy in the range from 1 to 100 keV.

## Description

### FIELD OF THE INVENTION

The present invention relates to radiography and, more in particular, to an X-ray imaging photostimulable phosphor screen or panel, useful in radiation applications as e.g. mammography.

### BACKGROUND OF THE INVENTION

In study results on the radiation damage of the storage phosphor CsBr:Eu²⁺ as reported by Jorg Zimmermann, Technical University of Darmstadt, Germany, in Journal of Luminescence, 114(2005), p.24-30, it has been shown that a high X-ray dose causes a significant deterioration of the photostimulated luminescence (PSL) accompanied by a degradation of the UV-excited Eu²⁺-fluorescence. Since no related dose-dependent increase of Eu³⁺ luminescence was observed, the decrease of Eu²⁺ fluorescence was attributed to an agglomeration of Eu²⁺ leading to luminescence quenching. The correlated mobility of Eu²⁺ ions was ascribed to large irradiation induced vacancies. In this regard F', M_{Eu}- and F₂-centres were observed by means of diffuse reflection and thermally stimulated luminescence (TSL) spectroscopy, and F'-centres could be regarded as a preliminary stage in the formation process of M_{Eu}-centres. In order to improve the radiation stability different co-doping ions were added. Co-doping with Li⁺ obviously reduced the radiation induced degradation. Results of diffuse reflection spectroscopy and deep temperature spectroscopy, lifetime measurements and a comparison of the PSL excitation spectra were leading to a model where a (Eu²⁺-V_{Cs})-dipole and Li⁺ are coupled through the Cs-vacancy (V_{Cs}). As it was assumed that Lithium acts as a neutral electron trap [Li⁺]⁰, it was anticipated that migrating electrons can be captured by F-centres, thereby forming F'-centres, so that the preliminary stage for the formation of M_{Eu}-centres was suppressed and a stabilization against radiation-induced degradation was achieved. From the patent literature use of Na⁺ ions as co-dopant is known from e.g. US-A 7,183,561.

Besides problems with respect to radiation hardness, alkali halide salt phosphors and scintillators suffer from degradation by moisture, as being very sensitive thereto. External measures as providing adequate inorganic subcoats and/or organic precoats, present between support and phosphor or scintillator layer or as providing one or more protective coatings between phosphor or scintillator layer and ambient atmosphere, require specific coating measures as has e.g. been described in US-Applications 2003/0038249, 2004/0108464, 2004/0164251, 2004/0228963, 2004/0183029, 2005/0139783, 2005/0153228, 2005/0211917, 2006/0027752, 2006/0049370; 2006/0065861; 2006/0081789, 2007/0063155, 2007/0096041, 2007/0075254 and in 2007/0114446 as well as in US-A's 6,710,356; 6,822,243; 6,992,304; 7,164,190; 7,173,258; 7,199,381; 7,202,485; 7,211,809; 7,265,371 and 7,262,421.

Moreover sensitivity to oxidation of divalent Eu is another weakness, besides the slow X-ray degradation.

### OBJECTS AND SUMMARY OF THE INVENTION

Therefore it is an object of the present invention to provide manufactured storage phosphor plates showing, after exposure to ionizing radiation, and after frequent re-use, a sufficient stability or radiation hardness, in standard humidity conditions, i.e. in the range from 40 to 60 % R.H..

In order to solve the problems as set forth above, it has been established that a binderless needle-shaped Cs(X,X'):Eu phosphor or scintillator layer having on top of its needle-shaped phosphors, aligned in parallel, an average ratio of divalent to trivalent europium dopant of more than 1:1; X representing Br and X' representing F, Cl, Br, I or a combination thereof, provides adequate measures as envisaged, provided that a decrease in the said average ratio is less than 2% per hour, while being exposed to X-rays having an energy in the range from 1 to 100 keV; i.e. an energy of about 28 keV as for mammographic applications and an energy in the range from 60 to 100 keV for general radiography.

In a method of preparing such a phosphor or scintillator layer to become deposited on a support by vapour deposition, said method makes use of heating as phosphor precursor raw materials a Cs(X,X') matrix compound and a CsₓEu_{y}X'_{(x+αy)} activator or dopant precursor compound, from a crucible unit comprising at least a bottom and surrounding side walls as a container for a mixture of a Cs(X,X') phosphor matrix compound and a CsₓEu_{y}X'_{(x+αy)} activator or dopant precursor compound wherein x, y and α are integers, wherein x/y is more than 0.25 and wherein α is at least 2, wherein X represents Br and wherein X' stands for F, Cl, Br, I or a combination thereof, both of them being present in said crucible as raw materials in liquefied form after heating said crucible, and wherein said matrix compound has a higher vapour pressure than said activator or dopant precursor compound, said method comprises a step of a vapour depositing said phosphor on said support by a method selected from the group consisting of physical vapour deposition, chemical vapour deposition and an atomization technique; followed by an annealing step in an ambient atmosphere, after vapour deposition and after cooling said phosphor or scintillator layer deposited on said support.

As an advantageous effect, more in particular for storage phosphor plates, prepared from CsEuBr₃ as Europium dopant precursor in the preparation of photostimulable CsBr:Eu phosphor plates, an improved radiation hardness is encountered, while maintaining a high level of divalent Europium dopant on top of the needles during a long exposure time with soft X-rays, if compared with storage phosphor plates, prepared from EuOBr as Europium dopant precursor, even in humidity conditions of up to about 90%. Such effects are advantageously applied, at least in mammographic applications with low exposure doses from X-rays having an energy in the range from 28 to 35 keV, wherein a high speed and maintained stability is required after frequent re-use of said storage phosphor plates in diagnostic imaging.

### BRIEF DESCRIPTION OF THE DRAWINGS

Fig. 1 shows Eu L₂ XANES spectra for Eu²⁺ and Eu³⁺ reference materials, further explained in the Examples.
Fig. 2 shows the calibration curve of fit procedure as will be explained in the Examples.

### DETAILED DESCRIPTION OF THE INVENTION

In the following description a radiation image storage phosphor screen, plate or panel, is called a "phosphor plate" from now on.

According to the present invention the binderless needle-shaped Cs(X,X'):Eu phosphor or scintillator layer has on top of its needle-shaped phosphors, aligned in parallel, an average ratio of divalent to trivalent europium dopant of more than 1:1; X representing Br and X'representing F, Cl, Br, I or a combination thereof, wherein said average ratio decreases to an extent of less than 2% per hour, while being exposed to X-rays having an energy in the range from 1 to 100 keV.
With respect to the analysis technique as applied in order to determine the average ratio of divalent to trivalent europium dopant, "XANES" analysis has been performed at the DORIS III synchrotron installation at Hamburg (DESY), Germany, at beam line L of Hasylab, in a research project in collaboration with the university of Ghent, Belgium. "XANES" is an abbreviation that stands for "X-ray Absorption Near Edge Structure". In this type of analysis, the sample is irradiated with monochromatic X-rays with an energy near the energy of an absorption edge of a specific element (an energy sweep of the incoming X-ray is performed). If the energy of the incoming X-ray is equal to the energy of the absorption edge, absorption occurs, i.e., transmission of the incoming beam decreases and X-ray fluorescence is observed. The position of the absorption edges of a specific element slightly shifts when the oxidation state of the element changes. For instance for Eu, a small but clear difference, in the order of a few eV, is observed between the energy of the L₂ edge of Eu²⁺ and Eu³⁺. A further explanation of the analysis conditions will be given in the Examples hereinafter.

In another embodiment according to the present invention said binderless needle-shaped Cs(X,X'):Eu,M^{I} phosphor or scintillator layer has on top of its needle-shaped phosphors, aligned in parallel, an average ratio of divalent to trivalent europium dopant of more than 1:1; X representing Br and X'representing F, Cl, Br, I or a combination thereof, and M^{I} representing at least one cation, selected from the group consisting of Li, Na, K and Rb (from the group IA of the Periodic System of the Elements), or at least one cation, selected from the group consisting of Cu, Ag and Au (from the group IB of the Periodic System of the Elements), or a combination thereof, wherein said average ratio decreases to an extent of less than 2% per hour, while being exposed to X-rays having an energy in the range from 1 to 100 keV, as analyzed by the analysis technique explained hereinbefore and as set out more in detail in the Examples.

Otherwise a method according to the present invention provides preparing a phosphor or scintillator layer to become deposited on a support by a vapour depositing step from a crucible unit by heating as phosphor precursor raw materials a Cs(X,X') matrix compound and an activator or dopant precursor compound, wherein said crucible unit comprises at least a bottom and surrounding side walls as a container for phosphor precursor raw materials present in said crucible, and wherein said Cs(X,X') matrix compound has a higher vapour pressure than said activator or dopant precursor compound, said method comprising a step of providing said activator or dopant compound in form of a precursor raw material represented by the formula CsₓEu_{y}X'_{(x+αy)}, wherein x, y and α are integers, wherein x/y is more than 0.25 and wherein α is at least 2, wherein X represents Br and wherein X' stands for F, Cl, Br, I or a combination thereof, both of them being present in said crucible as raw materials in liquefied form after heating said crucible; followed by an annealing step in an ambient atmosphere after said vapour depositing step and after cooling said phosphor or scintillator layer deposited on said support.

In a more particular embodiment of the said method according to the present invention, besides said activator or dopant precursor compound, at least one compound is added having a cation, selected from the group consisting of Li,Na,K and Rb (from the group IA of the Periodic System of the Elements), or at least one compound having a cation, selected from the group consisting of Cu, Ag and Au (from the group IB of the Periodic System of the Elements), or a combination thereof. Preferred as additional compounds are chloride, bromide or iodide salts, without however being limitative.
With respect to the crucible unit as mentioned in the context of the present invention, without being limitative, there is referred to US-A's 7,070,658; 7,141,135; 7,291,224 and 7,276,182; as well as to US-Applications 2004/0219289, 2005/0000411, 2007/0036893, 2007/0098880, 2007/0098881 and 2007/0122544. Further with respect to the support, without being limitative too, there is referred to US-A's 7,102,143 and 7,199,379 and to US-Applications 2007/0181824, 2007/0246660, 2007/0246662 and 2007/0246663.
In the method according to the present invention as disclosed hereinbefore, said activator or dopant compound advantageously is CsEuBr₃ and said annealing step is performed in an ambient atmosphere at a temperature of more than 150°C for more than 1 hour.

In another embodiment according to the method of the present invention, said activator or dopant compound is CsEuBr₃, and said annealing step is performed in an ambient atmosphere at a temperature of at least 170°C for at least 1 hour.

In still another embodiment according to the method of the present invention, said activator or dopant compound is CsEuBr₃, and said annealing step is performed in an ambient atmosphere at a temperature of not more than 200°C for a time not more than 5 hours.
In a more particular embodiment, referring to the method according to the present invention as disclosed hereinbefore said ambient atmosphere is air having a relative humidity of not more than 90 %, when determined at room temperature.
As the cooling step after vapour deposition proceeds up to room temperature, an annealing step starting at room temperature is an embodiment. So in one embodiment in the method according to the present invention said annealing step starts at room temperature.
As a result, when applying the method according to the present invention as disclosed hereinbefore, said storage phosphor is CsBr:Eu.

In another embodiment, when applying the method according to the present invention as disclosed hereinbefore, said storage phosphor is CsBr:Eu,M^{I} wherein M^{I} represents at least one cation, selected from the group consisting of Li, Na, K and Rb (from the group IA of the Periodic System of the Elements), or at least one cation, selected from the group consisting of Cu, Ag and Au (from the group IB of the Periodic System of the Elements), or a combination thereof.

In case of presence of one or more co-dopant(s) M^{I}, an amount in the range from 1-1000 µmole per mole and, more preferred, in the range from 20-100 µmole per mole is recommended.
In the method of the present invention, said a vapour depositing step proceeds in a continuous process.
Further in another embodiment according to the method of the present invention, said a vapour depositing step proceeds in a batch process.
In still another embodiment in the method of the present invention, said vapour depositing step proceeds by a multi-evapouration process. Such a multi-evapouration process is a process, wherein evapouration proceeds from more than one crucible and/or in more than one evapouration step. If more than one evapouration step is applied, changes in the raw material mix present in the crucible may be performed in between the evapouration steps and the evapouration steps may be performed from one or more crucibles.
The method according to the present invention moreover provides a vapour depositing step of said phosphor on a substrate or support by a method selected from the group consisting of a physical vapour depositing step, a chemical vapour depositing step or a vapour depositing step by an atomization technique. Without being limitative, the said substrate or support may be made of glass, a metal, an organic polymer or a carbon fiber reinforced composition. As a subbing layer an antistatic layer may be present, as e.g. a PEDT (polyethylene dioxythiophene) containing layer upon a polymeric support, or, alternatively, upon a polymeric organic precoat layer or as an additional layer upon an inorganic subbing layer onto a metal support such as an aluminum or a titanium support.

### Examples

While the present invention will hereinafter be described in connection with preferred embodiments thereof, it will be understood that it is not intended to limit the invention to those embodiments.

### Comparative Storage Plate CB75022

A CsBr:Eu photostimulable phosphor screen having a flexible anodized aluminum was prepared in a vacuum chamber by means of a thermal vapour deposition process, starting from a mixture of CsBr and EuOBr as raw materials.

Said deposition process onto said flexible anodized aluminum support was performed in such a way that said support was rotating so that the momentary magnitude of the velocity was constant over its whole area. An electrically heated oven and a refractory tray or boat in which 750 g of of a mixture of CsBr and EuOBr as raw materials in a 99.5%/0.5% CsBr/EuOBr percentage ratio by weight were present to become vaporized. The crucible was an elongated boat having a length of 175 mm, a width of 48 mm and a height of 60 mm composed of "tantalum" having a thickness of 0.25 mm, composed of 3 integrated parts: a crucible container, an inner lid and an outer lid or cover with a controllable slot outlet. The longitudinal parts were folded from one continuous tantalum base plate in order to overcome leakage and the head parts are welded. The outer and inner lid were containing holes in a configuration wherein a ratio between the total surface of perforations in said inner lid more close to the bottom of crucible and the total surface of perforations in said outer lid more close to the support was not more than 1.0.

Perforations present in said outer lid thus representing a total surface exceeding the total surface of perforations present in said inner lid more close to the bottom of the said crucible, were moreover positioned onto both lids, so that in said vapour deposition apparatus the said raw materials or the bottom of the said crucible could not be directly seen through said perforations from any point of the support, whereupon vapour deposited phosphors should be deposited.

Under vacuum pressure (a pressure of 2 x 10 Pa equivalent with 2 x 10⁻³ mbar) maintained by a continuous inlet of argon gas into the vacuum chamber, and at a sufficiently high temperature of the vapour source (760°C) and was deposited thereupon successively while said support was rotating over the vapour stream. Said temperature of the vapour source was measured by means of thermocouples present outside and pressed under the bottom of said crucible and tantalum protected thermocouples present in the crucible.

The anodized aluminum substrate support having a thickness of 800 µm, a width of 18 cm and a length of 24 cm was positioned at the side whereupon the phosphor should be deposited.

### Inventive Storage Plate CB75513

Same as hereinbefore, except for the vaporization of a mixture of CsBr and CsEuBr₃ as raw materials in a 99.0 % / 1.0 % ratio by weight. Molar percentage ratios of Eu and of CsBr were about the same as for plate CB75022 in this case. The crucible was filled with 650 g of raw materials and the plate thus prepared was called CB75513.

In the Table 1 amounts are given (in percentages of divalent Europium, the rest standing for trivalent Europium dopant) as found back after analysis at the top (FRONT) of the deposited layer in the HASYLAB SYNCHROTRON, DESY campus, Notkestraβe 85, 22607 Hamburg, Germany, by means of X-ray Absorption Near Edge Structure (XANES-experiments) as an analysis technique, allowing to determine the amount of dopant, present in a valence state II or III. XANES analysis was applied as a technique allowing specification of divalent and trivalent Eu-dopant as being present upon the needles of the needle-shaped phosphors in a series of needle image plates (NIPs). Besides that object, another particular study was focused on the problem of how to avoid irradiation beam damage of the phosphor in the plates.

Analysis conditions for XANES experiments on Eu doped CsBr NIP's as applied were so that the Eu L₂ XANES spectra were recorded at beamline L of the DESY III storage ring in fluorescent mode, thus determining the optic with which the X-ray beam became guided to the sample to be examined.

The Eu L₂ edge was chosen as the intense Cs L line series originating from the CsBr matrix overlap with the Lα fluorescence radiation from the Eu L₃ edge.

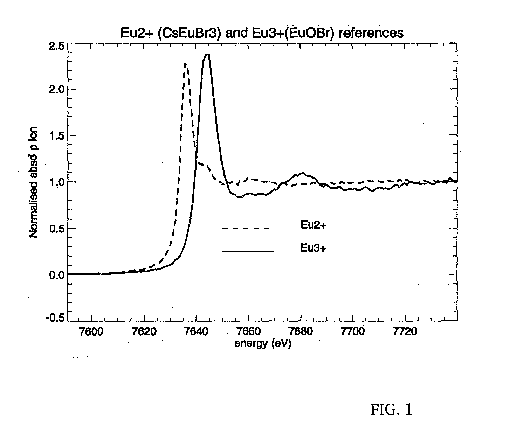

An intense edge peak ('white line': WL) is present in Eu L₂ XANES spectra, which position increases with the oxidation state of the Eu cation, see Fig. 1. If both oxidation states are present, two well separated WL peaks can be observed. The area of the WL peaks for each oxidation state can in principle be used to determine the relative concentration of each oxidation state, after calibration of the fit method with a series of samples with known mean or average Europium oxidation state.

The following analysis conditions were used in order to collect these XANES spectra. In order to decrease the intensity of the incoming X-ray beam, the said beam was guided to pass through an Aluminum filter of 100 µm. Moreover in order to decrease the X-ray dose per cm², the incoming beam was not focused so that the actual spot size on the sample was a rectangle of 1 x 2.5 mm². The analysis was performed at ambient atmosphere, and no special gas conditions were applied further.

The energy sweep of the incoming X-ray beam was performed over an energy range from 7560 eV to 7740 eV. In the pre-edge region (7560 eV - 7610 eV) the energy step of the scan was 2 eV. Near the edge and on the edge (7610 eV - 7640 eV) the energy step of the scan was increased to 0.5 eV; beyond the edge region (7640 eV - 7740 eV) the energy step of the scan was 3 eV. In order to limit the analysis time, also the time per step was varied over the energy range: 7560 ev - 7610 eV at 5 s per step, 7610 eV - 7640 eV at 20 s per step, 7640 eV - 7740 eV at 5 sec per step.

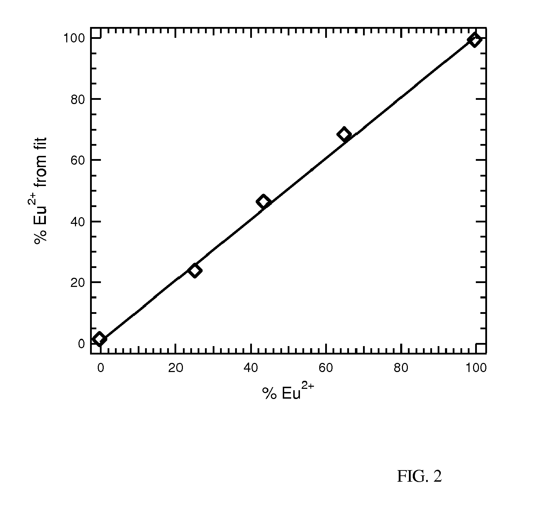

The calibration method for quantification of the XANES data was as follows. The shape of the XANES edge spectrum could be approximated by mathematical functions. The XANES edge spectra for the references (only one oxidation state, thus one WL) could be regarded as the combination of a step function and a WL peak. The step could be approximated by a "tanh"-function and the WL by a Voigt function (= weighted sum of a Gauss and a Lorentzian). With these functions a non-linear least squares fit to the XANES edge spectrum was possible. Observation of the spectra for the different Eu²⁺ and Eu³⁺ reference compounds was showing that the WL peak area for the Eu³⁺ was larger than for the Eu²⁺. The ratio of the relative concentration was thus not equal, but only proportional to the ratio of the WL peak areas (area ratio). This proportionality factor was required to be determined before the relative concentrations in the unknown sample could be determined. After analysis of a series of CsEuBr₃/EuOBr mixed powders, the proportionality factor between the WL peak areas and the relative Eu^{2+/3+} concentration was found to be 1.8. The calibration curve as set up with a series of mixed EuOBr (Eu³⁺) and CsEuBr₂ (Eu²⁺) powder samples is given in Fig. 2.

In the Table 1 concentrations of divalent Eu were analyzed in front (see: FRONT) after the first run, i.e. exposure with X-rays having an energy of about 7 keV (7±1 keV) during a time of 30 minutes per run. Also sensitometric data as sensitivity (expressed as SAL% - Scan Average Level percentage) and sharpness (expressed as MTF at 3 line pairs per mm) were given for the inventive plate CB75513 as well as for the comparative plate CB75022.■

**Table 1**

| Plate No. | Precursor (weight%) | Annealing treatment in standard atmosphere | FRONT Eu²⁺ | p.p.m. Eu* | SAL % | MTF 31p/mm |
|---|---|---|---|---|---|---|
| CB75513 | 1% CsEuBr₃ | not annealed | 89.0% | 271 | 177 | |
| CB75513 | 1% CsEuBr₃ | 1 hour; 170°C | | 271 | 649 | |
| CB75513 | 1% CsEuBr₃ | 4 hours; 170°C | 84.9% | 271 | 643 | |
| CB75022 | 0.50% EuOBr | 4 hours;170°C | 60.2% | 441 | 571 | 0.201 |
| CB75513 | 1% CsEuBr₃ | 3 hours;170°C | | 271 | 675 | 0.174 |

| | | | | | | |
|---|---|---|---|---|---|---|
| * Eu* : total Eu-content (µmole/mole). ■ | | | | | | |

As becomes clear from the results in Table 1 hereinafter, a higher amount of Europium dopant in the divalent state versus in the trivalent state is present on top of the needles.

In Table 2 amounts of precursor used in both screens have been given for the inventive CB75513 and the comparative CB75022 screens, both annealed during 4 hours at 170°C. Europium dopant amounts have been expressed in mole% and percentages of divalent Europium dopant at the top (FRONT) of the needles have been determined in the HASYLAB SYNCHROTRON by means of XANES-experiments after several (1 to 6) runs - each run taking 30 minutes - with monochromatic X-rays, having a low energy of 7 keV, in order to have an idea about X-ray resistance and stability of the CsBr:Eu photostimulable phosphor plate. Moreover the speed as determined from photostimulated luminescence measurements (see above) has been given for both plates at the start of the radiation experiments. Figures thus registered after frequent re-use are representative for low radiation exposure applications as in mammography.

**Table 2**

| Plate No. | Precursor | FRONT ²⁺ Eu Run 1 | FRONT ²⁺ Eu Run 2 | FRONT ²⁺ Eu Run 3 | FRONT ²⁺ Eu Run 4 | FRONT ²⁺ Eu Run 6 | Δ/run* (%) |
|---|---|---|---|---|---|---|---|
| CB75513 (inv.) | 0.41 mole % CsEuBr₃ | 84.9% | 84.6% | 82.6% | 82.1% | 82.8% | -0.35 |
| CB75022 (comp.) | 0.43 mole % EuOBr | 51.3% | 45.1% | 42.2% | | | -3.03 |
| CB75022 (comp.) | 0.43 mole % EuOBr | 60.2% | 66.8% | 55.3% | | | -1.61 |
| CB75022 (comp.) | 0.43 mole % EuOBr | 73.4% | 65.4% | 66.4% | 54.5% | 59.8% | -2.27 |

| | | | | | | | |
|---|---|---|---|---|---|---|---|
| run : 1 run stands for an exposure time of 30 minutes. Δ /run* : average change, per run, of divalent Eu mole% on top of the needles as analyzed. | | | | | | | |

It is clear that the more sensitive inventive plate is the plate having been started with Europium dopant precursor CsEuBr₃, although the Eu dopant amount in the CsBr:Eu mix thereof is not increased by making use of said CsEuBr₃ as Europium dopant precursor, i.e. 0.41 mole% versus 0.43 mole% in the CsBr:Eu mix as used for the comparative plate, prepared with EuOBr as precursor.

Moreover, the stability for the annealed plates while continuously being irradiated with X-rays is clearly in favor of the inventive plate, wherein average divalent Europium percentages are not only higher on top of the needles, if compared with the cross section - i.e. measured along the needles -, but moreover remain almost constant at a high level of more than 80 %. Opposite thereto the lower level (up to at most 74.3 % as in the Table 2 in the first run) as for the comparative plate is not maintained to an extent as high as for the inventive plate.

According to the present invention, it is thus recommended to make use of CsEuBr₃ as Europium dopant precursor in the preparation of photostimulable CsBr:Eu phosphor plates, as that precursor is clearly in favor of speed, in favor of a higher divalent Europium dopant amount on top of the needles and, consequently, in favor of radiation hardness, while maintaining the high level of divalent Europium dopant on top of the needles during a long exposure time with X-rays. These effects as described with respect to the present invention can advantageously be applied, at least in applications as e.g. mammography, wherein low exposure doses are applied.

Having described in detail preferred embodiments of the current invention, it will now be apparent to those skilled in the art that numerous modifications can be made therein without departing from the scope of the invention as defined in the appending claims. ■

## Claims

1. Binderless needle-shaped Cs(X,X'):Eu phosphor or scintillator layer having on top of its needle-shaped phosphors, aligned in parallel, an average ratio of divalent to trivalent europium dopant of more than 1:1; X representing Br and X'representing F, Cl, Br, I or a combination thereof, wherein said average ratio decreases to an extent of less than 2% per hour, while being exposed to X-rays having an energy in the range from 1 to 100 keV.

2. Binderless needle-shaped Cs(X,X'):Eu,M^{I} phosphor or scintillator layer having on top of its needle-shaped phosphors, aligned in parallel, an average ratio of divalent to trivalent europium dopant of more than 1:1; X representing Br and X' representing F, Cl, Br, I or a combination thereof, and M^{I} representing at least one cation, selected from the group consisting of Li, Na, K and Rb, or at least one cation, selected from the group consisting of Cu, Ag and Au, or a combination thereof, wherein said average ratio decreases to an extent of less than 2% per hour, while being exposed to X-rays having an energy in the range from 1 to 100 keV.

3. Method of preparing a phosphor or scintillator layer to become deposited on a support by a vapour depositing step from a crucible unit by heating as phosphor precursor raw materials a Cs(X,X') matrix compound and an activator or dopant precursor compound, wherein said crucible unit comprises at least a bottom and surrounding side walls as a container for phosphor precursor raw materials, and wherein said Cs(X,X') matrix compound has a higher vapour pressure than said activator or dopant precursor compound, said method comprising a step of providing said activator or dopant compound in form of a precursor raw material represented by the formula CsₓEu_{y}X'_{(x+αy)}, wherein x, y and α are integers, wherein x/y is more than 0.25 and wherein α is at least 2, wherein X represents Br and wherein X' stands for F, Cl, Br, I or a combination thereof, both of them being present in said crucible as raw materials in liquefied form after heating said crucible; followed by an annealing step in an ambient atmosphere after said vapour depositing step and after cooling said phosphor or scintillator layer deposited on said support.

4. Method according to claim 3, wherein besides said activator or dopant precursor compound, at least one compound is added having a cation, selected from the group consisting of Li,Na,K and Rb, or at least one compound having a cation, selected from the group consisting of Cu, Ag and Au, or a combination thereof.

5. Method according to claim 3 or 4, wherein said activator or dopant compound is CsEuBr₃ and wherein said annealing step is performed in an ambient atmosphere at a temperature of more than 150°C for more than 1 hour.

6. Method according to claim 3 or 4, wherein said activator or dopant compound is CsEuBr₃ and wherein said annealing step is performed in an ambient atmosphere at a temperature of at least 170°C for at least 1 hour.

7. Method according to claim 3 or 4, wherein said activator or dopant compound is CsEuBr₃ and wherein said annealing step is performed in an ambient atmosphere at a temperature of not more than 200°C for a time not more than 5 hours.

8. Method according to claim 3 or 4, wherein said ambient atmosphere is air having a relative humidity of not more than 90 %, when determined at room temperature.

9. Method according to claim 3 or 4, wherein said annealing step starts at room temperature.

10. Method according to claim 3, wherein said storage phosphor is CsBr:Eu.

11. Method according to claim 4, wherein said storage phosphor is CsBr:Eu,M^{I} wherein M^{I} represents at least one cation, selected from the group consisting of Li, Na, K and Rb, or at least one cation, selected from the group consisting of Cu, Ag and Au, or a combination thereof.

12. Method according to any one of the claims 3 to 11, wherein said vapour depositing step of said phosphor on a substrate proceeds by a method selected from the group consisting of a physical vapour depositing step, a chemical vapour depositing step or a vapour depositing step by an atomization technique. ■
